Europäisches Patentamt

European Patent Office

Office européen des brevets

(19)

(11) Numéro de publication: **0 003 133**
**B1**

(12) **FASCICULE DE BREVET EUROPEEN**

(45) Date de publication du fascicule de brevet: **29.04.81**

(51) Int. Cl.³: **H 01 R 9/18, H 01 M 2/24**

(21) Numéro de dépôt: **79100078.9**

(22) Date de dépôt: **11.01.79**

(54) Dispositif de traversée étanche d'une paroi simple ou double en matière plastique par une connexion électrique et application à une batterie de générateurs électrochimiques.

(30) Priorité: **18.01.78 FR 7801347**

(43) Date de publication de la demande:
**25.07.79 Bulletin 79/15**

(45) Mention de la délivrance du brevet:
**29.04.81 Bulletin 81/17**

(84) Etats Contractants Désignés:
**BE DE FR GB SE**

(56) Documents cités:
**FR - A - 2 054 768**
**FR - A - 2 123 712**
**FR - A - 2 156 440**
**GB - A - 618 708**
**GB - A - 869 763**
**GB - A - 908 000**
**US - A - 3 703 589**
**US - A - 3 778 539**

(73) Titulaire: **SAFT - SOCIETE DES ACCUMULATEURS FIXES ET DE TRACTION S.A. dite:**
**156, avenue de Metz**
**F-93230 Romainville (FR)**

(72) Inventeur: **Barber, Jacques**
**Résidence Olympie - Tokyo E89-**
**F-33310 Lormont (FR)**
Inventeur: **Guerinault, Jean-Marc**
**88, rue Séguineau**
**F-33700 Merignac (FR)**

(74) Mandataire: **Weinmiller, Jürgen et al,**
**Zeppelinstrasse 63**
**D-8000 München 80 (DE)**

Courier Press, Leamington Spa, England.

## Dispositif de traversée étanche d'une paroi simple ou double en matière plastique par une connexion électrique et application à une batterie de générateurs électrochimiques

L'invention concerne un dispositif de traversée étanche d'une paroi simple ou double en matière plastique par une connexion électrique et son application à une batterie de générateurs électrochimiques, plus particulièrement lorsque la connexion relie deux électrodes appartenant à deux générateurs séparés par la paroi. Celle-ci peut être une paroi simple entre deux alvéoles ménagés dans le boîtier unique d'une batterie d'accumulateurs monobloc. Ce peut aussi être une paroi double formée par la juxtaposition de deux parois appartenant aux boîtiers indépendants de deux accumulateurs.

Le brevet français n° 71 02 851, publié sous le n° 2 123 712, décrit un dispositif de traversée étanche d'une paroi par une connexion entre une électrode et une borne extérieure d'une batterie d'accumulateurs au plomb. La connexion traverse un orifice de la paroi, de section plus grande que la sienne, et un joint annulaire d'étanchéité obture la région annulaire de l'orifice laissée libre par la connexion. Le contact étanche du joint avec la paroi et la connexion est obtenu par la compression axiale du joint entre une patte reliée à l'électrode et la borne. La connexion est elle-même réalisée par la liaison par fusion de saillies appartenant respectivement à la patte et à la borne qui sont en plomb, cette liaison s'effectuant, en même temps que la compression du joint, en rapprochant les deux pièces l'une de l'autre à travers l'ouverture de la paroi.

Il va de soi qu'un tel dispositif, s'il convient pour les accumulateurs au plomb dans lesquels les pièces de connexion sont en plomb, ne peut plus être utilisé lorsque les pièces de connexion sont en des métaux plus durs et fondant à plus haute température, par exemple en acier, nickelé, nickel ou alliages de nickel, matériaux employés habituellement dans les accumulateurs à électrolyte alcalin.

Le but de l'invention est notamment de réaliser un dispositif de traversée étanche utilisable avec des métaux quelconques.

L'invention a pour objet un dispositif de traversée étanche d'une paroi simple ou double en matière plastique par un élément de connexion électrique à travers un orifice de la paroi, comprenant un premier joint annulaire d'étanchéité obturant la région annulaire de l'orifice laissée libre par l'élément de connexion, et comprimé axialement, caractérisé par le fait que la compression est réalisée par des moyens de serrage s'appliquant de part et d'autre de la paroi à deux pièces métalliques présentant chacune une face sensiblement parallèle à ladite paroi, la distance entre lesdites faces, et par là la compression du joint étant définie par la présence d'un élément métallique intercalaire qui appartient à l'élément de connexion électrique, ce dernier assurant la connexion électrique entre lesdites pièces.

La liaison par fusion, telle que décrite dans le brevet français n° 71 02 851 précité, est remplacée par des moyens de serrage assurant un appui métal sur métal. Cet appui métal sur métal garantit un contact électrique même en cas de déformation permanente du joint par suite de son vieillissement, ou en cas de fluage de la matière plastique de la paroi.

Selon un mode de réalisation conforme à l'invention, ledit élément intercalaire se présente sous la forme d'un bossage s'étendant à partir de ladite face de l'une des deux pièces.

Selon un autre mode de réalisation, ledit élément intercalaire est formé par un bossage s'étendant à partir de chacune desdites faces, les deux bossages s'appuyant l'un contre l'autre.

Selon un autre mode de réalisation, ledit élément intercalaire est une entretoise métallique présentant deux faces parallèles à la paroi, situées de part et d'autre de celle-ci sur lesquelles s'appuient respectivement les deux faces des pièces métalliques précitées.

L'une au moins des deux faces de l'entretoise peut être constituée par un épaulement au-delà duquel s'étend une partie filetée traversant la pièce métallique correspondante et recevant un écrou par lequel cette pièce est serrée sur l'épaulement. De même l'une au moins des deux faces de l'entretoise peut être une face terminale à partir de laquelle est ménagé un trou borgne fileté dans lequel s'engage une vis qui traverse la pièce métallique et serre celle-ci sur la face terminale.

Selon une variante de réalisation de l'invention, l'entretoise est une bague traversée par les moyens de serrage, quie peuvent être constitués par une vis et un écrou. Cette variante est avantageuse en ce qu'elle permet un montage plus facile, notamment dans le cas d'une connexion intermédiaire de batterie monobloc. L'intérieur de la bague ouvrant un passage pour l'électrolyte entre les deux compartiments situés de part et d'autre de la paroi, il y a lieu dans ce cas de prévoir un second joint d'étanchéité annulaire autour des moyens de serrage.

L'invention sera mieux comprise grâce à quelques exemples de réalisation donnés ci-après à titre illustratif et non limitatif, en regard du dessin annexé dans lequel:

La figure 1 est une vue partielle en coupe d'une batterie d'accumulateurs monobloc comportant un dispositif de traversée étanche selon l'invention.

La figure 2 est une vue éclatée des moyens de serrage représentés sur la figure 1.

La figure 3 représente une variante du dispositif de traversée de la figure 1.

La figure 3a montre une vue semi-coupée agrandie d'un ensemble joint-rondelle utilisé dans le dispositif de la figure 3.

Les figures 4, 5, 6 et 7, sont des vues analogues aux figures 1 et 3, relatives à des batteries d'accumulateurs à bacs individuels, montrant chacune des variantes du dispositif selon l'invention.

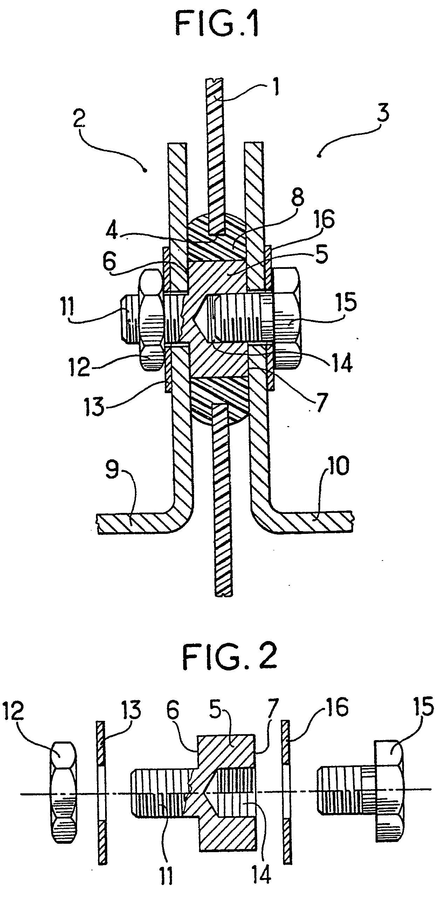

La figure 1 montre un dispositif de traversée étanche d'une paroi plastique 1 par une connexion électrique, que peut relier deux électrodes non représentées, situées respectivement dans deux compartiments 2 et 3 d'une batterie d'accumulateurs monobloc, séparés par la paroi 1. Celle-ci présente un orifice 4 à l'intérieur duquel se trouve une entretoise métallique 5 présentant deux faces 6 et 7 parallèles à la paroi 1, situées de part et d'autre de celle-ci. L'espace annulaire compris entre l'entretoise 5 et le bord de l'orifice 4 est occupé par un joint d'étanchéité 8 du type passe-fil. Le joint 8 est comprimé axialement, c'est-à-dire dans la direction perpendiculaire à la paroi 1, entre deux pièces métalliques 9 et 10 présentant des faces en regard sensiblement parallèles à celle-ci et qui s'appuient respectivement sur les faces 6 et 7, et reliées respectivement aux deux électrodes d'accumulateurs entre lesquelles est réalisée la connexion. Comme cela apparaît clairement de la figure 2, la face 6 de l'entretoise est constituée par un épaulement au-delà duquel s'étend une partie filetée 11 traversant la pièce 9 et recevant un écrou 12 par lequel la pièce 9 est serrée sur l'épaulement 6, par l'intermédiaire d'une rondelle 13. La face 7 constitue une face terminale de l'entretoise 5, à partir de laquelle est percé un trou borgne fileté 14 dans lequel s'engage une vis 15 qui traverse la pièce 10 et serre celle-ci sur la face 7 par l'intermédiaire d'une rondelle 16.

On voit que l'action des moyens de serrage, que constituent la partie filetée 11, l'écrou 12, le trou 14 et la vis 15, assure la compression du joint 8 et par suite l'étanchéité aux liquides de la traversée. En effet le seul passage existant entre les compartiments 2 et 3 est l'espace annulaire obturé de façon étanche par le joint 8. D'autre part l'action des moyens de serrage qui s'exerce de part et d'autre de la paroi 1 sur les pièces 9 et 10, assure l'appui de celles-ci sur les faces de l'entretoise 5, d'où une liaison électrique fiable entre les deux pièces. Cet appui limite la compression du joint 8, qui est définie par la distance entre les faces des pièces 9 et 10, donc par l'epaisseur de l'entretoise 5. La liaison électrique obtenue reste stable dans le temps, même en cas de déformation du joint 8 ou de la paroi 1.

Le même résultat pourrait être obtenu en utilisant comme moyen de serrage, au lieu d'un système tige filetée-écrou d'un côté et d'un système trou borgne-vis de l'autre, soit deux systèmes tige filetée-écrou de part et d'autre du corps de l'entretoise, soit deux systèmes trou borgne-vis sur les deux faces de l'entretoise. Dans ce dernier cas les deux trous borgnes sont coaxiaux, mais ils peuvent aussi avoir des axes différents.

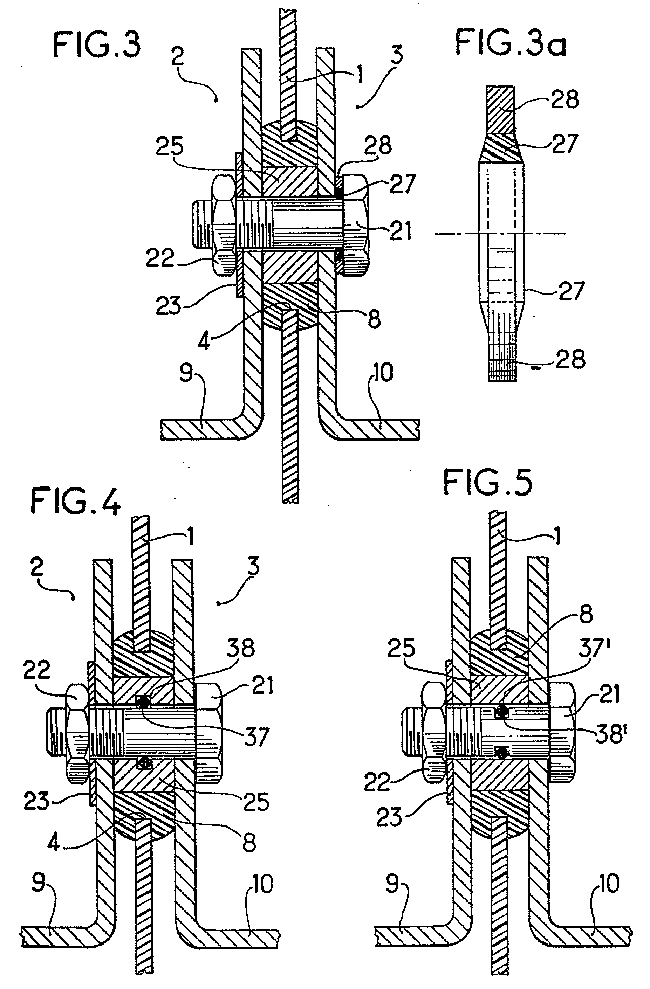

Le dispositif montré à la figure 3 est constitué en partie par les mêmes éléments que celui de la figure 1, qui sont désignés par les mêmes références. Il en diffère essentiellement par le fait que l'entretoise est une bague 25 traversée, ainsi que les pièces 9 et 10, par une vis 21 portant un écrou 22. Les moyens de serrage sont donc constitués par la vis 21 et l'écrou 22, avec une rondelle 23. L'alésage de la bague 25 fournit un passage pour l'électrolyte entre les compartiments 2 et 3. Pour assurer l'étanchéité de la traversée, ce passage est bloqué par un second joint élastique 27 entourant la tige de la vis 21 et lui-même entouré par une rondelle métallique 28 dont il est solidaire, comme on le voit sur la figure 3a montrant l'ensemble avant montage. Le joint 27 est donc comprimé radialement entre la tige de la vis et la rondelle 28. Il est d'autre part comprimé axialement entre la tête de la vis 21 et la pièce 10. Cette compression est assurée, en même temps que celle du joint 8, par le serrage de la vis et de l'écrou. De même que celle du joint 8, la compression du joint 27 est limitée par un appui métal sur métal, celui de la tête de vis et de la pièce 10 de part et d'autre de la rondelle 28. Le vieillissement de ce joint ne peut donc pas engendrer un jeu préjudiciable à la qualité de la connexion électrique.

Les figures 4 et 5 représentent deux variantes du dispositif de la figure 3. Le joint 27 et la rondelle 28 de la figure 3 sont remplacés dans la figure 4 par un joint torique 37 à section circulaire, logé dans une gorge 38 ménagée dans la bague 25 et dans la figure 5 par un joint torique 37' à section circulaire logé dans une gorge 38' prévue dans la vis 21.

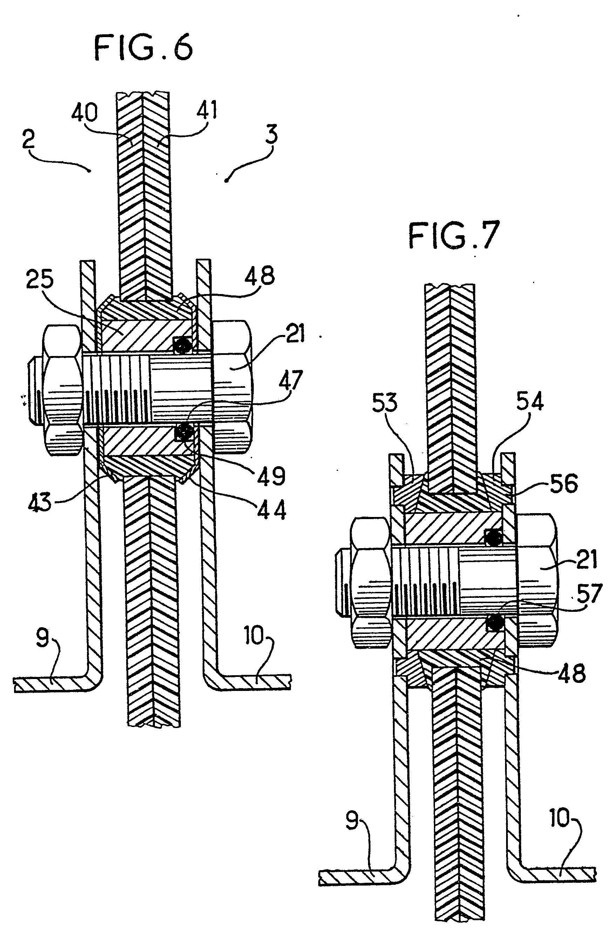

La figure 6 présente une autre variante dans laquelle la paroi à traverser est double, c'est-à-dire est formée par la juxtaposition d'une paroi 40 limitant le compartiment 2 et d'une paroi 41 limitant le compartiment 3. Le joint 8 du type passe-fil est remplacé dans ce mode de réalisation par un joint 48 à section rectangulaire. Deux coupelles métalliques 43 et 44, formant rondelles d'appui, sont interposées entre la bague 25 et le joint 48 d'une part et respectivement les pièces 9 et 10 d'autre part. Les coupelles 43 et 44 sont recourbées vers les parois 40 et 41 de façon à favoriser le contact étanche entre celles-ci et le joint 48. Ce contact assure, en même temps que l'étanchéité à l'électrolyte du passage entre les deux compartiments 2 et 3, celle du passage entre chacun de ces compartiments et l'espace compris entre les deux parois, c'est-à-dire l'espace extérieur aux accumulateurs. Un joint 47 semblable au joint 37 de la figure 4 a son logement 49 ménagé dans la bague 25 et limité par celle-ci, par la tige de la vis 21 et par la coupelle 43.

Selon une variante, non représentée, le joint

47 pourrait, de la même manière que le joint 37' de la figure 5, avoir son logement dans une gorge prévue dans la vis 21.

La mode de réalisation de la figure 7 diffère de celui de la figure 6 par le fait que les coupelles 43 et 44 sont remplacées par des pièces plastiques 53 et 54 interposées entre le joint 48 et les pièces 9 et 10, la bague 25 et un joint 57 étant en contact direct avec les pièces 9 et 10. Les pièces 53 et 54 sont fixées par des tétons 55 s'engageant dans des perforations 56 des pièces 9 et 10.

Selon une variante, non représentée, le joint 57 pourrait, de la même manière que le joint 37' de la figure 5, avoir son logement prévu dans la vis 21.

Les caractéristiques des variantes décrites peuvent être combinées de façon différentes. Ainsi un joint tel que 8 (figures 1, 3, 4 et 5) peut être utilisé avec une paroi double, ou un joint tel que 48 (figures 6 et 7) avec une paroi simple. Un ensemble joint-rondelle tel que 27—28 (figure 3) peut être employé à la place des joints 47 et 57 dans les dispositifs des figures 6 et 7, le joint 57 pouvant quant à lui remplacer le joint 37 de la figure 4. Une entretoise telle que celle de la figure 1 peut être combinée avec un joint rectangulaire tel que 48 et/ou avec une paroi double.

D'autres modifications peuvent être apportées aux modes réalisation décrits sans sortir du cadre de l'invention. Ainsi la forme des pièces 9 et 10 peut être modifiée, leurs faces en regard n'étant pas nécessairement planes. Ainsi qu'il a été dit précédemment l'entretoise peut être remplacée par un bossage solidaire de l'une de ces pièces, ou par des saillies ou bossages présentés par ces deux pièces, comme dans le brevet n° 71 02 851 précité.

**Revendications**

1. Dispositif de traversée étanche d'une paroi simple (1) ou double (40, 41) en matière plastique par un élément de connexion électrique à travers un orifice (4) de la paroi, comprenant un premier joint annulaire d'étanchéité (8) obturant la région annulaire de l'orifice laissée libre par l'élément de connexion, et comprimé axialement, caractérisé par le fait que la compression est réalisée par des moyens de serrage (11, 12, 14, 15) s'appliquant de part et d'autre de la paroi à deux pièces métalliques (9, 10) présentant chacune une face sensiblement parallèle à ladite paroi (1), la distance entre lesdites faces, et par là la compression du joint (8) étant définie par la présence d'un élément métallique intercalaire (5) qui appartient à l'élément de connexion électrique, ce dernier assurant la connexion électrique entre lesdites pièces.

2. Dispositif selon la revendication 1, caractérisé par le fait que l'élément se présente sous la forme d'un bossage s'étendant à partir de ladite face de l'une des deux pièces.

3. Dispositif selon la revendication 1, caractérisé par le fait que ledit élément intercalaire est formé par un bossages s'étendant à partir de chacune desdites faces, les deux bossages s'appuyant l'un contre l'autre.

4. Dispositif selon la revendication 1, caractérisé par le fait que ledit élément intercalaire est une entretoise métallique (5, 25) présentant deux faces (6, 7) parallèles à la paroi (1) situées de part et d'autre de celle-ci et sur lesquelles s'appuient respectivement les deux faces des pièces métalliques (9, 10) précitées.

5. Dispositif selon la revendication 4, caractérisé par le fait que l'une au moins desdites deux faces de l'entretoise (6) est constituée par un épaulement au-delà duquel s'étend un partie filetée (11) traversant la pièce métallique correspondante (9) et recevant un écrou (12) par lequel ladite pièce (9) est serrée sur ledit épaulement.

6. Dispositif selon la revendication 4, caractérise par le fait que l'une au moins desdites deux faces (7) de l'entretoise est une face terminale à partir de laquelle est percé un trous borgne fileté (14) dans lequel s'engage une vis (15) qui traverse la pièce métallique (10) correspondante et serre celle-ci sur ladite face terminale.

7. Dispositif selon la revendication 4, caractérisé par le fait que ladite entretoise est une bague (25) dont l'alésage est traversé par lesdits moyens de serrage (21, 22), et qu'un second joint d'étanchéité annulair (27, 37, 37', 47, 57) est prévu autour desdits moyens pour empêcher la communication de fluide à travers cet alésage.

8. Dispositif selon la revendication 7, caractérisé par le fait que ledit second joint d'étanchéité (37) est en contact avec l'entretoise (25) et les moyens de serrage (21).

9. Dispositif selon la revendication 7, caractérisé par le fait que ledit second joint d'étanchéité (7) est en contact avec les moyens de serrage (21) et l'une des pièces métalliques (10).

10. Dispositif selon la revendication 7, caractérisé par le fait que lesdits moyens de serrage comportent une vis (21) dont la tête s'appuie sur l'une desdites métalliques (10) et recevant un écrou (22) qui s'appuie sur l'autre desdites pièces (9).

11. Application d'un dispositif de traversée selon l'une des revendications 1 à 10, à une batterie de générateurs électrochimiques comportant au moins deux compartiments (2, 3) séparés par une paroi simple ou double en matière plastique et dans laquelle les deux pièces métalliques (9, 10) sont reliées chacune à une électrode située dans un compartiment différent.

**Claims**

1. A device for passing an element of electrical connection in a sealed manner through an opening (4) in a single wall (1) or double wall (40,41) made of a plastic material, with a first annular seal ring (8) which seals the annular zone of the orifice left free by the connection element and which is compressed axially, characterized in that the compression is realized by clamping means (11,12,14,15) which are applied on either side of the wall to two metal parts (9,10) each having a side substantially parallel to said wall (1), the distance between said sides and therefore the compression of the seal (8) being defined by the presence of a metal distance element (5) belonging to the element for electrical connection, the latter providing the electric connection between said parts.

2. A device according to claim 1, characterized in that said distance element is in the form of a projection extending from said side of one of the two parts.

3. A device according to claim 1, characterized in that said distance element is formed by a projection extending from each of said sides, the two projections bearing against each other.

4. A device according to claim 1, characterized in that said distance element is a metal spacer (5,25) with two sides (6,7) parallel to the wall (1) and situated on either side thereof and on which the two sides of the above-mentioned metal parts (9,10) bear respectively.

5. A device according to claim 4, characterized in that at least one of said sides of the spacer (6) is constituted by a shoulder beyond which extends a threaded portion (11) passing through the corresponding metal part (9) and accommodating a nut (12) which clamps said part (9) on said shoulder.

6. A device according to claim 4, characterized in that at least one of said two sides (7) of the spacer is an end side in which is drilled a tapped blind hole (14) in which is engaged a screw (15) which passes through the corresponding metal part (10) and clamps it on said end side.

7. A device according to claim 4, characterized in that said spacer is a ring (25) through which said clamping means (21,22) pass, and in that a second annular seal ring (27,37,37',47,57) is fitted round said means in order to prevent fluid communication through said ring.

8. A device according to claim 7, characterized in that said second seal ring (37) is in contact with the spacer (25) and the clamping means (21).

9. A device according to claim 7, characterized in that said second seal ring (7) is in contact with the clamping means (21) and one of the metal parts (10).

10. A device according to claim 7, characterized in that said clamping means include a screw (21) whose head bears against one of said metal parts (10) and accommodates a nut (22) which bears against the other said part (9).

11. Application of a device according to one of the claims 1 to 10 to a battery of electrochemical generators, which has at least two compartments (2,3) separated by a single or double wall made of a plastics material, and in which the two metal parts (9,10) are each connected to an electrode situated in a different compartment.

## Patentansprüche

1. Vorrichtung für die dichte Durchführung eines elektrischen Verbindungselements durch eine Öffnung (4) in einer einfachen (1) oder doppelten Wand (40, 41) aus Plastikmaterial, mit einem ersten Dichtungsring (8), der den vom Verbingungselement freigelassenen Ringbereich der Öffnung verschließt und axial komprimiert wird, dadurch gekennzeichnet, daß die Kompression durch Spannmittel (11,12,14,15) entsteht, die auf beiden Seiten der Wand auf zwei Metallteile (9,10) einwirken, von denen jedes eine zur Wand (1) parallele Seite aufweist, wobei der Abstand zwischen diesen Seiten und damit die Kompression der Dichtung (8) durch das Vorhandensein eines metallischen Zwischenelements (5) bestimmt wird, das zum elektrischen Verbindungselement gehört, wobei letzteres die elektrische Verbindung zwischen den Metallteilen herstellt.

2. Vorrichtung nach Anspruch 1, dadurch gekennzeichnet, daß das Element die Form eines Vorsprungs ausgehend von der genannten Seite eines der beiden Metallteile hat.

3. Vorrichtung nach Anspruch 1, dadurch gekennzeichnet, daß das Zwischenelement aus zwei Vorsprüngen gebildet wird, die je von der genannten Seite der beiden Metallteile ausgehen, wobei die beiden Vorsprünge sich aufeinander abstützen.

4. Vorrichtung nach Anspruch 1, dadurch gekennzeichnet, daß das Zwischenelement ein metallisches Abstandsstück (5,25) ist, das zwei zur Wand (1) parallele Seiten (6,7) aufweist, die sich auf beiden Seiten der Wand befinden und auf die sich die beiden Seiten der Metallteile (9,10) abstützen.

5. Vorrichtung nach Anspruch 4, dadurch gekennzeichnet, daß zumindest eine der beiden Seiten des Abstandsstücks (6) aus einer Schulter besteht, über die hinaus sich ein Gewindeteil (11) erstreckt, das das entsprechende Metallteil (9) durchquert und eine Mutter (12) aufnimmt, durch die das Teil (9) gegen die Schulter gespannt wird.

6. Vorrichtung nach Anspruch 4, dadurch gekennzeichnet, daß zumindest eine der beiden Seiten (7) des Abstandsstücks eine Endseite ist, in die ein mit Gewinde versehenes Sackloch (14) gebohrt ist, in das eine Schraube (15) eingreift, die das entsprechende Metallteil (10) durchquert und dieses gegen die Endseite spannt.

7. Vorrichtung nach Anspruch 4, dadurch gegennzeichnet, daß das Abstandsstück ein Ring (25) ist, dessen Bohrung von den Spannmitteln (21,22) durchquert wird, und daß ein zweiter Dichtring (27, 37, 37', 47, 57) um die Spannmittel herum vorgesehen ist, um eine Flüssigkeitsübertragung durch diese Bohrung zu vermeiden.

8. Vorrichtung nach Anspruch 7, dadurch gekennzeichnet, daß der zweite Dichtring (37) mit dem Abstandsstück (25) und den Spannmitteln (21) in Verbindung steht.

9. Vorrichtung nach Anspruch 7, dadurch gekennzeichnet, daß der zweite Dichtring (7) mit den Spannmitteln (21) und einem der Metallteile (10) in Verbindung steht.

10. Vorrichtung nach Anspruch 7, dadurch gekennzeichnet, daß die Spannmittel eine Schraube (21) aufweisen, deren Kopf auf einem der Metallteile (10) aufliegt, und die eine Mutter (22) aufnimmt, die auf dem anderen Metallteil (9) aufliegt.

11. Anwendung einer Durchführungsvorrichtung nach einem der Ansprüche 1 bis 10 auf eine Batterie elektrochemischer Generatoren mit mindestens zwei Abteilen (2,3), die durch eine einfache oder doppelte Wand aus Plastikmaterial getrennt sind, wobei in der Batterie die beiden Metallteile (9,10) je mit einer Elektrode in einem anderen Abteil verbunden sind.

# FIG.1

# FIG.2

0 003 133

FIG.3

FIG.3a

FIG.4

FIG.5

2

# FIG.6

# FIG.7